# EUROPÄISCHE PATENTSCHRIFT

(11) **EP 0 787 634 B1**
(45) Veröffentlichungstag und Bekanntmachung des Hinweises auf die Patenterteilung: **18.09.2002**
(21) Anmeldenummer: 97100562.4
(22) Anmeldetag: 16.01.1997
(51) Int. Cl.: B60R 25/10

(54) **Diebstahlsicherungs-Einrichtung**
Anti-theft device
Dispositif antivol

(30) Priorität: 02.02.1996 DE 19603747
(43) Veröffentlichungstag der Anmeldung: 06.08.1997
(73) Patentinhaber: ROBERT BOSCH GMBH, 70442 Stuttgart (DE)
(72) Erfinder: Meyer-Staufenbiel, Torsten, Ing. grad., 71254 Ditzingen (DE); Thuersam, Markus, Dipl.-Ing., 71263 Weil der Stadt (DE)

(56) Entgegenhaltungen:
- EP-A- 0 366 378
- WO-A-95/13944
- DE-A- 4 442 807
- US-A- 5 335 264

## Beschreibung

### Stand der Technik

Die Erfindung geht aus von einer Einrichtung nach der Gattung des Hauptanspruchs. Eine bekannte Einrichtung dieser Art (EP 366 378) umfaßt ein Autotelefon, das mit einer Erkennungsvorrichtung verbunden ist, welche das Fahrzeug auf Eintreten abnormaler, den Versuch einer unberechtigten Inbetriebnahme anzeigender Zustände überwacht. Registriert die Erkennungsvorrichtung einen abnormalen Zustand, beispielsweise durch Detektion der Geräusche brechenden Glases, veranlaßt sie das Autotelefon zur automatischen Abgabe einer vorbestimmten Botschaft an eine vorbestimmte Funknetznummer. Auf diese Weise wird der Versuch eines Fahrzeugdiebstahls frühzeitig erkannt. Voraussetzung für die Funktion dieser bekannten Einrichtung ist allerdings, daß das Autotelefon einsatzbereit und nicht an der Absetzung eines Notrufsignals gehindert ist.

Vorgeschlagen wurde weiterhin bereits, das in einem Fahrzeug vorhandene Autotelefon dazu zu nutzen, das Fahrzeug im Falle eines Diebstahls über das Autotelefon durch Wählen einer geeigneten Nummer stillzusetzen (US-PS 5 276 728). Ein weiterer, auf dem Konzept des Anrufes eines gestohlenen Fahrzeugs beruhender Vorschlag (DE-OS 42 40 284) sieht vor, mit Hilfe eines auf einen Anruf hin erhaltenen Rückrufsignals das Auffinden eines gestohlenen Fahrzeugs zu erleichtern.

Aus der WO 95/13944 ist bereits eine Überwachungseinrichtung für ein Kraftfahrzeug bekannt. Im Falle eines Einbruchsversuchs wird eine Kommunikationsverbindung mit einer zentralen Überwachungseinrichtung aufgebaut, vorzugsweise über Mobiltelefon. Befindet sich die Überwachungseinrichtung im geschärften Zustand, so wird das Mobiltelefon abgeschaltet.

Der Erfindung liegt die Aufgabe zugrunde, eine ein Autotelefon nutzende Diebstahlsicherungseinrichtung dahingehend weiter zu verbessern, daß im Falle eines Diebstahlversuchs zuverlässig ein Notfallsignal abgesetzt wird.

Diese Aufgabe wird gelöst durch eine Einrichtung mit den kennzeichnenden Merkmalen des Hauptanspruchs. Der vorgeschlagenen Lösung liegt die erfindungsgemäße Erkenntnis zugrunde, daß die Umgehung einer das Autotelefon nutzenden Diebstahlsicherungseinrichtung insbesondere dadurch in einfacher Weise möglich ist, daß das Autotelefon im betroffenen Fahrzeug während der unberechtigten Inbetriebnahme angerufen wird, und dadurch eine automatische Absetzung eines Notfallsignals nicht erfolgen kann. Erfindungsgemäß sperrt sich deshalb das Autotelefon gegen eingehende Anrufe, wenn das Fahrzeug abgestellt wird. vorzugsweise erfolgt das Sperren selbsttätig. In vorteilhafter Weiterbildung der erfindungsgemäßen Einrichtung werden eingehende Anrufe, wenn das Autotelefon gesperrt ist, auf einen vorbestimmten anderen Anschluß umgeleitet. Zweckmäßig erfolgt in jedem Fall eine Wiederfreigabe eines gesperrten Autotelefones gegen eingehende Anrufe, wenn zuvor ein Notfallsignal abgesetzt wurde.

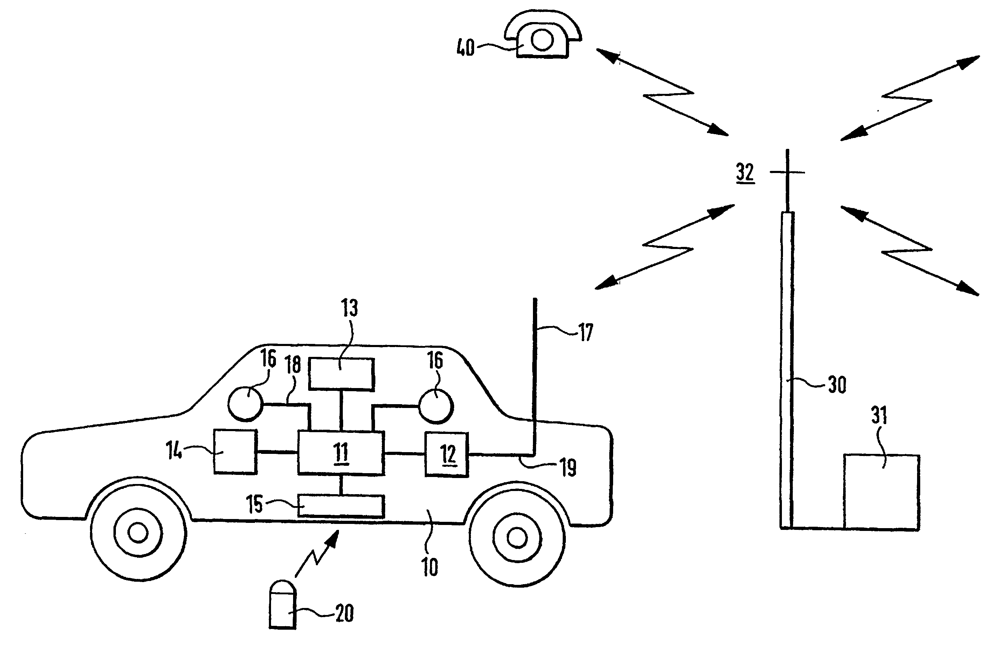

Ein Ausführungsbeispiel der Erfindung wird nachfolgend unter Bezugnahme auf die Zeichnung näher erläutert.

### Zeichnung

Die Figur zeigt ein Strukturschaubild einer Diebstahlsicherungseinrichtung.

### Beschreibung des Ausführungsbeispiels

Die Figur zeigt ein Fahrzeug 10, das mit einer Diebstahlsicherungseinrichtung ausgestattet ist. Deren Zentrum bildet ein Sicherungssteuergerät 12, das mit einer Zugangseinrichtung 15, einem Motorsteuergerät 14, einem Autotelefon 11, einem oder mehreren Sensoren 16 sowie einer Alarmanlage 13 verbunden ist. Bei den Komponenten 11 bis 16 handelt es sich durchweg um an sich bekannte Einrichtungen. Die Zugangseinrichtung 15 umfaßt den - nicht dargestellten - Fahrzeugschlüssel sowie wahlweise elektronisch codierte Zugangsmittel, deren Zugehörigkeit zu dem Fahrzeug 10 Voraussetzung für dessen Inbetriebnahme ist. Als Beispiel für elektronisch codierte Zugangsmittel ist in der Figur ein Handsender 19 angedeutet, welcher mit der Zugangseinrichtung 15 beispielsweise über Infrarotsignale wechselwirkt. Betriebsrelevantes Steuergerät 14 ist in der Regel das Motorsteuergerät, das sich im Falle des Versuches einer unberechtigten Inbetriebnahme des Fahrzeugs verriegelt, wodurch eine Inbetriebnahme nicht möglich ist. In derselben Weise können auch weitere betriebsrelevante Steuergeräte mit dem Sicherungssteuergerät 11 verbunden sein, etwa die Getriebesteuerung oder ein ASR/ABS-Steuergerät. Bei den Sensoren 16, die nicht zwingend vorhanden sein müssen, handelt es sich üblicherweise um Sensoren zur Erkennung von unberechtigten, gewaltsamen Fahrzeuginbetriebnahmen, wie zum Beispiel Glasbruchmelder oder Bewegungsmelder. Ebenfalls optional ist die Alarmanlage 13, die, wenn sie vorhanden ist, in der Regel eine Betätigung der Fahrzeughupe und/oder der Fahrzeugbeleuchtung im Einbruchsfalls einschließt. Das Telefon 12 ist üblicherweise als Mobiltelefon ausgeführt, welches bei Bedarf aus dem Fahrzeug 10 herausnehmbar ist. Die Verbindung der Elemente 12 bis 16 mit dem Sicherungssteuergerät 11 erfolgt über ein Leitungssystem 18, das, wie in der Figur angedeutet, in Form von Einzelleitungsverbindungen ausgeführt sein kann. Alternativ kann das Leitungssystem 18 auch in Form eines Datenbusses ausgeführt sein.

Mit dem Telefon 12 über eine Leitung 19 verbunden ist weiterhin eine Fahrzeugantenne 17, zur Abgabe bzw. Entgegennahme von Funksignalen an bzw. aus einem Funknetz 32. Das Funknetz ist realisiert durch eine Vielzahl von Sende/Empfangsstationen 30, welche über eine Zentrale 31 verwaltet werden. Über das Funknetz 32 kann der Nutzer des Fahrzeugs 10 mit anderen an das Funknetz 32 angeschlossenen stationären oder mobilen Teilnehmern 40 Signale austauschen.

Nachfolgend wird der Betrieb der vorbeschriebenen Anordnung erläutert. Während des Betriebs eines Fahrzeugs durch einen dazu berechtigten Benutzer kann dieser mittels des Telefons 12 über das Funknetz 32 unbeschränkt mit anderen Teilnehmern 40 kommunizieren. Beendet ein Benutzer einen rechtmäßig eingeleiteten Betrieb und verläßt das Fahrzeug, wird dieses vom Sicherungssteuergerät 11 erkannt, in einfacher Weise an der dann vorliegenden Zündschlüsselposition "Zündung aus", zweckmäßig in Verbindung mit dem Erkennen der Fahrzeugtürenposition "Türen geschlossen" bzw. dem Empfang eines Funkverriegelungssignals durch die Zugangseinrichtung 15. Das Sicherungssteuergerät 11 übersendet dem Autotelefon 12 daraufhin ein Sperrsignal, woraufhin jenes sich gegen die Entgegennahme von eingehenden Anrufen aus dem Funknetz 32 verriegelt. Unternimmt nun ein Unberechtigter den Versuch, daß Fahrzeug 10 etwa gewaltsam in Betrieb zu nehmen, wird dies von einem oder mehreren der Sensoren 16 erfaßt, beispielsweise von einem Glasbruchsensor, und dem Sicherungssteuergerät 11 in Form eines entsprechenden Signals mitgeteilt. Das Sicherungssteuergerät 11 veranlaßt daraufhin das Autotelefon 12 zur selbsttätigen Absetzung eines Notfallsignals in das Funknetz 32. Das Notfallsignal wird von der Funknetzzentrale 31 empfangen und einem vorbestimmten Teilnehmer 40 zugeleitet. Der vorbestimmte Teilnehmer kann beispielsweise der rechtmäßige Eigentümer des Fahrzeugs 10 sein, sofern er den mobilen Teil des Autotelefons mit sich führt, und/oder eine Polizeistation. Ein Unterbinden der Absetzung des Notfallsignals durch den Unberechtigten ist selbst dann nicht möglich, wenn er die Teilnehmernummer des Fahrzeugs 10 für das Funknetz 32 kennt, und das Fahrzeug, bevor er einen unberechtigten Inbetriebnahmeversuch beginnt, anwählt, um so das in dem Fahrzeug 10 vorhandene Autotelefon 12 zu blockieren.

Sinnvoll ist es, eingehende Anrufe, die während der Stillstandszeit eines erfindungsgemäß gesicherten Fahrzeugs eingehen, das heißt, wenn das Autotelefon 12 eingehende Anrufe nicht annimmt, auf einen vorbestimmten anderen Teilnehmer 40, etwa den Hausanschluß des Fahrzeugeigentümers oder eine Mobilbox, welche eingehende Anrufe aufzeichnet, umzuleiten.

Zweckmäßig ist ferner, das Autotelefon 12 im Falle der Absetzung eines Notfallsignals im Anschluß daran unbedingt auch für eingehende Anrufe wieder freizuschalten. Ein zur Nutzung des Fahrzeugs Berechtigter kann dann im Falle einer unberechtigten Nutzung dem Fahrzeug über das Funknetz 32 und das Autotelefon 12, vorzugsweise ohne daß der unrechtmäßige Benutzer dies bemerkt, beispielsweise ein Signal übermitteln, welches zur Stillsetzung des Fahrzeugs 10 führt. Alternativ kann das Fahrzeug auch dazu veranlaßt werden, ohne Wissen des unrechtmäßigen Benutzers ein Signal in das Funknetz 32 abzugeben, welches die Bestimmung der Fahrzeugposition erlaubt.

Unter Beibehaltung des zugrundeliegenden Gedankens ist für die vorgeschlagene Diebstahlsicherungseinrichtung eine Vielzahl von Ausgestaltungen möglich. Dies gilt insbesondere für die Struktur der fahrzeugseitigen Einrichtung. Beispielsweise kann die Alarmanlage 13 fehlen oder können Zugangseinrichtung 15, Sicherungssteuergerät 11 und betriebsrelevantes Steuergerät 14 in einem Modul realisiert sein. Eine Vielzahl von Möglichkeiten besteht auch hinsichtlich der Erkennung des Versuches einer unberechtigten Inbetriebnahme durch das Sicherungssteuergerät 11 und der Wirkung des daraufhin durch das Autotelefon 12 abgesetzten Notfallsignals. Auch die Ausgestaltung des Funknetzes 30 bis 32 erlaubt eine Vielzahl von Variationen, welche den Erfindungsgedanken aber nicht verlassen. So kann beispielsweise die Verarbeitung eines von einem Fahrzeug 10 abgesetzten Notfallsignals auch derart erfolgen, daß eine Weiterleitung über ein Kabelleitungsnetz erfolgt.

## Patentansprüche

1. Diebstahlsicherungseinrichtung für Kraftfahrzeuge mit einem Sicherungssteuergerät (11) zur Betätigung einer Wegfahrsperre und/oder einer Alarmanlage (13), sowie einem damit verbundenen Autotelefon (12), das im Falle des Versuches einer unberechtigten Inbetriebnahme des Fahrzeugs (10) selbsttätig ein Notfallsignal in ein Funknetz (32) abgibt, **dadurch gekennzeichnet, daß** beim Stillsetzen des Fahrzeugs (10) das Sicherungssteuergerät (11) ein Sperrsignal an das Autotelefon (12) übermittelt, woraufhin dieses eingehende Anrufe nicht mehr annimmt und zugleich in der Lage ist, im Falle des Versuchs einer unberechtigten Inbetriebnahme des Fahrzeugs (10) selbsttälig ein Notfallsignal in das Funknetz (32) abzugeben.

2. Einrichtung nach Anspruch 1, **dadurch gekennzeichnet, daß** das Sicherungssteuergerät (11) das Sperrsignal selbsttätig beim Schärfen der Wegfahrsperre und/oder der Alarmanlage (13) abgibt.

3. Einrichtung nach Anspruch 1, **dadurch gekennzeichnet, daß** das Autotelefon (12) bei Erhalt eines Sperrsignals vom Sicherungssteuergerät (11) ein Umleitungsauslösesignal in das Funknetz (32) abgibt, wodurch eingehende Anrufe auf einen vorbestimmten anderen Teilnehmer (40) umgeleitet werden.

4. Einrichtung nach Anspruch 1, **dadurch gekennzeichnet, daß** nach Absetzung eines Notrufsignals im Falle des Versuches einer unberechtigten Inbetriebnahme des Fahrzeugs (10) eine unbedingte Wiederfreigabe des Autotelefons (12) für eingehende Anrufe erfolgt.

## Claims

1. Anti-theft device for motor vehicles having a security controller (11) for activating an immobilizer and/or an alarm system (13) and a car telephone (12) which is connected thereto and, in the case of an attempt at unauthorized activation of the vehicle (10), automatically outputs an emergency signal into a radio network (32), **characterized in that**, when the vehicle (10) is deactivated, the security controller (11) transmits a blocking signal to the car telephone (12), in response to which the latter no longer receives incoming calls, and at the same time it is itself capable of automatically outputting an emergency signal into the radio network (32) in the case of an attempt at an unauthorized activation of the vehicle (10).

2. Device according to Claim 1, **characterized in that** the security controller (11) automatically outputs the blocking signal when the immobilizer and/or the alarm system (13) is/are primed.

3. Device according to Claim 1, **characterized in that**, when a blocking signal is received from the security controller (11), the car telephone (12) outputs a call-divert triggering signal into the radio network (32), as a result of which incoming calls are diverted to another predetermined subscriber (40).

4. Device according to Claim 1, **characterized in that** after an emergency call signal has been made in the case of an attempt at an unauthorized activation of the vehicle (10), the car telephone (12) is unconditionally re-released for incoming calls.

## Revendications

1. Dispositif antivol pour véhicule automobile comprenant un appareil de commande antivol (11) pour actionner un moyen d'immobilisation et/ou une installation d'alarme (13) ainsi qu'un téléphone de voiture (12) relié à celui-ci, et qui en cas de tentative d'utilisation non autorisée du véhicule (10), émet automatiquement un signal de secours par un réseau radio (32),
**caractérisé en ce qu'**
à l'arrêt du véhicule (10), l'appareil de commande antivol (11) transmet un signal de blocage par le téléphone de voiture (12) pour que celui-ci ne prenne plus d'appel, et en même temps soit en mesure en cas de tentative d'utilisation non autorisée du véhicule (10), d'émettre automatiquement un signal de secours par le réseau radio (32).

2. Installation selon la revendication 1,
**caractérisée en ce que**
l'appareil de commande de sécurité (11) émet automatiquement le signal de blocage lors de l'armement du dispositif de blocage et/ou de l'installation d'alarme (13).

3. Installation selon la revendication 1,
**caractérisée en ce qu'**
à la réception d'un signal de blocage de l'appareil de commande antivol (11), le téléphone de voiture (12) émet un signal de déclenchement de déviation dans le réseau radio (32), pour que les appels entrants soient transmis à un autre abonné (40) prédéterminé.

4. Installation selon la revendication 1,
**caractérisée en ce qu'**
après l'émission d'un signal de secours en cas de tentative de mise en route non autorisée du véhicule (10), il y a une libération immédiate du téléphone de voiture (12) pour les appels entrants.
